# EUROPÄISCHE PATENTSCHRIFT

(11) **EP 0 730 707 B1**
(45) Veröffentlichungstag und Bekanntmachung des Hinweises auf die Patenterteilung: **22.03.2000**
(21) Anmeldenummer: 95900070.4
(22) Anmeldetag: 08.11.1994
(51) Int. Cl.: F02C 9/18, F23R 3/26

(54) **GASARMATUR**
GAS VALVE
VANNE A GAZ

(30) Priorität: 22.11.1993 DE 4339724
(43) Veröffentlichungstag der Anmeldung: 11.09.1996
(73) Patentinhaber: SIEMENS AKTIENGESELLSCHAFT, 80333 München (DE)
(72) Erfinder: STUHLMÜLLER, Franz, D-91054 Buckenhof (DE); JUNG, Jürgen, D-51429 Bergisch Gladbach (DE); TEUBNER, Herbert, D-51941 Overath (DE)
(86) Internationale Anmeldenummer: DE9401312
(87) Internationale Veröffentlichungsnummer: WO9514854

(56) Entgegenhaltungen:
- EP-A- 0 239 462
- DE-A- 2 511 172
- DE-A- 3 209 135
- GB-A- 2 017 219

## Beschreibung

Die Erfindung betrifft eine Gasarmatur für eine Anordnung aus einer Gasturbine, einem Verdichter für Verbrennungsluft und einer Brennkammer, wobei ein mit einem Verdichterauslaß verbundener Kanal und ein mit einem Turbineneinlaß verbundener Kanal eine gemeinsame Wand aufweisen, und wobei wenigstens auf einer Seite der gemeinsamen Wand ein Querschott als Quertrennwand vorgesehen ist.

Bei der Erzeugung von Elektrizität in Kraftwerken unter Einsatz von Gasturbinen müssen diese vor mechanischer Überlastung geschützt werden. Derartige mechanische Überlastungen werden beispielsweise bei extremen Unterschreitungen der Nennlast oder bei einem störfallbedingtem Lastabwurf an der Turbine auftreten, wenn es nicht gelingt, deren Drehzahl zu begrenzen. Eine Möglichkeit zur Begrenzung der Turbinendrehzahl bei Fortfall der bremsenden Wirkung von deren Last besteht in der Umlenkung der von einem Verdichter geförderten Verbrennungsluft an einer Brennkammer vorbei direkt in den Turbineneinlaß.

Eine hierzu geeignete Armatur zeigt die EP 0 285 825 B1. Bei dieser bekannten Anordnung hat ein Luftkanal für die verdichtete Verbrennungsluft kreisringförmigen Querschnitt und umschließt einen Kanal für heißes, zur Turbine strömendes Treibgas. Im Luftkanal liegt in der Nähe des Verdichters eine Ventilkammer mit einer Vielzahl von gleichmäßig auf den Umfang verteilten, paarweise angeordneten Ventilöffnungen, von denen je Paar eine zur Fortsetzung des Luftkanals dient und die andere direkt in den Treibgas führenden Kanal mündet. Je ein Ventilpaar, also je ein Ventil zum Luftkanal und je ein zum Treibgas führender Kanal wird von einem gemeinsamen Antrieb betätigt, so daß die beiden Ventile wechselweise öffnen und schließen. Nachteilig ist hierbei der insbesondere durch die Vielzahl der erforderlichen Ventile bedingte maschinentechnische Aufwand.

Durch die DE 32 09 135 A1 ist für eine Gasturbine eine Brennkammer bekannt, bei der die zur Verbrennung erforderliche Luft in mehrere Teilströme aufgeteilt ist, von denen einer direkt an einem Brenner mündend ungeregelt bleibt. Das Mengenverhältnis von zwei weiteren Teilströmen, einer Primärluftmenge und einer Sekundärluftmenge, ist lastabhängig steuerbar. Die Steuerung erfolgt dabei über einen Stellring und von diesem getragene PrimärluftSteuerflächen und Sekundärluft-Öffnungen. Durch die Steuerung der Teilströme der Verbrennungsluft ist eine gezielte Oxidation des Brennstoffs gewährleistet, so daß die Bildung von Stickoxiden minimiert ist. Zur Überbrückung axialer Abstände zwischen Primär- und Sekundärluftöffnungen sind dabei aber noch Primär- und/oder Sekundärluftkanäle erforderlich, die neben einem apparativen Aufwand auch einen Druckabfall für den von ihnen jeweils geführten Teilluftstrom zur Folge haben.

Durch die DE 26 20 424 A1 ist es darüber hinaus bekannt, im Einlaßkanal einer Brennkammer für einen Teilstrom der Luft einen Schieber vorzusehen, durch den dieser Teilstrom der Menge nach steuerbar ist. Hierzu werden zwei übereinanderliegende, mit Schlitzen versehene Scheiben gegeneinander verdreht, so daß die Schlitze sich gegenseitig mehr oder weniger überdecken bzw. mehr oder weniger Strömungsquerschnitt für den gesteuerten Teilstrom der Luft freigeben.

Der Erfindung liegt nun die Aufgabe zugrunde, für eine Gasturbinenanlage eine Gasarmatur zu schaffen, die gleichermaßen einfach aufgebaut und betriebssicher ist und die mit sehr kurzer Umschaltzeit für einen Gasstrom gleichzeitig einen Weg verschließt und einen anderen Weg öffnet.

Diese Aufgabe wird erfindungsgemäß für eine Gasarmatur der eingangs genannten Art dadurch gelöst, daß das Querschott und in deren verdichterseitigem Bereich die gemeinsame Wand durch einen Schieber abgedeckt sind und daß durch Schlitze im Schieber korrespondierende Schlitze in der gemeinsamen Wand und im Querschott wechselweise verschließbar sind.

Gemäß vorteilhaften Ausgestaltungen der Erfindung ist vorgesehen, daß die gemeinsame Wand zwischen dem Querschott und der Mündung des von dieser verschlossenen Verdichterauslasses liegt und daß der Schieber im Querschnitt L-förmig ist.

Nach einer sehr zweckmäßigen Weiterbildung der Erfindung liegen der Turbineneinlaß und der Verdichterauslaß konzentrisch ineinander, wobei der Turbineneinlaß und der Verdichterauslaß im Querschnitt kreis- bzw. kreisringförmig sind und der ringförmig ausgebildete Schieber parallel zu den Schlitzflächen bewegbar ist.

Eine weitere vorteilhafte Ausgestaltung der Erfindung besteht darin, daß der Schieber in einer Endstellung die Schlitze im Querschott verschließt und gleichzeitig die Schlitze in der gemeinsamen Wand freigibt, und daß die freigegebenen Schlitze in der gemeinsamen Wand einen Umgehungskanal darstellen, durch den verdichtete Luft an der Brennkammer vorbei direkt vom Verdichterauslaß zum Turbineneinlaß strömt.

Die erfindungsgemäße Gasarmatur ist sehr vorteilhaft, weil sie mit einer sehr geringen Anzahl von gegeneinander bewegten Teilen und dadurch bedingt mit einer sehr geringen Anzahl von Dichteinrichtungen arbeitet und gleichzeitig sehr kurze Umschaltwege und bedingt dadurch auch sehr kleine Umschaltzeiten und damit schnelle Reaktionen ermöglicht.

Ein Ausführungsbeispiel der Erfindung wird anhand einer Zeichnung näher erläutert.

Im einzelnen zeigen:

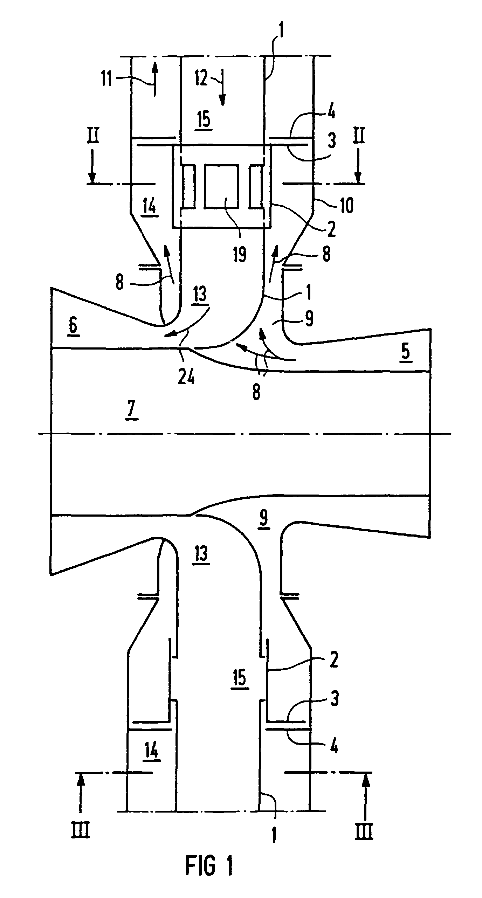

- FIG 1: ein Schnittbild durch eine Anordnung aus einem Verdichter, einer Turbine und zwei erfindungsgemäßen Gasarmaturen,
- FIG 2: einen Schnitt durch eine der Gasarmaturen entlang der Linie II-II und
- FIG 3: einen Schnitt durch die andere Gasarmatur entlang der Linie III-III.

Einander entsprechende Bauteile sind in allen Figuren mit den gleichen Bezugszeichen versehen.

Eine gemeinsame Welle 7 eines Verdichters 5 und einer Turbine 6 trägt deren nicht näher dargestellte Schaufeln. Die gemeinsame Welle 7 trägt außerdem eine Verlängerung zur Kupplung mit einer anzutreibenden Maschine, beispielsweise einem Elektrogenerator.

Von dem Verdichter 5 geförderte verdichtete Luft strömt in Richtung von Pfeilen 8 durch einen Verdichterauslaß 9 zu einer Gasarmatur 10 und von dort im Normalbetrieb weiter in Richtung eines Pfeiles 11 zu einer nicht dargestellten Brennkammer. Vorzugsweise sind mehrere Gasarmaturen und diesen zugeordnete Brennkammern gleichmäßig über den Umfang der Turbine verteilt vorgesehen.

Als Brennkammer kommen dabei insbesondere Brennkammern mit Wirbelschichten zur Verbrennung fester Brennstoffe, beispielsweise Braunkohle, Steinkohle oder Abfallstoffen, in Frage. In der Brennkammer wird durch bekannte Feuerungsführung und durch Zugabe von Reaktionsmitteln ein an Stickoxid und an Schwefeldioxid armes Heißgas erzeugt. Die Brennkammern sind vorzugsweise in einiger Entfernung von der Turbine, beispielsweise in einem besonderen von einer Turbinenhalle getrennten Bauwerk, aufgestellt. Das Heißgas wird in nicht näher dargestellter Art und Weise entstaubt und fließt anschließend in Richtung eines Pfeiles 12 in die Armatur 10 zurück und verläßt diese wieder durch einen Turbineneinlaß 13 in Richtung eines Pfeiles 24.

Im Bereich jeder Armatur 10 liegen ein Kanal 14 zur Führung der verdichteten Luft und ein Kanal 15 zur Führung des Heißgases konzentrisch ineinander, wobei der im Querschnitt kreisringförmige Kanal 14 den im Querschnitt kreisförmigen Kanal 15 umfaßt. Ein Querschott 4 mit Schlitzen 16 erstreckt sich über den gesamten Querschnitt des Kanals 14. Die Kanäle 14 und 15 sind durch eine gemeinsame Wand 1 voneinander getrennt. Diese beiden Kanälen 14 und 15 gemeinsame Wand 1 weist in ihrem verdichterseitig vor dem Querschott 4 liegenden Bereich Schlitze 17 auf. Die Schlitze 16 und 17 sind mit gleicher Teilung über den Umfang des Querschotts 4 bzw. der gemeinsamen Wand 1 verteilt.

Das Querschott 4 und der die Schlitze 17 aufweisende Abschnitt der gemeinsamen Wand 1 werden von einem im Querschnitt L-förmigen Schieber abgedeckt. Dieser Schieber liegt mit einem flanschartigen Teil 3 an dem Querschott 4 und mit einem schaftartigen Teil 2 an der gemeinsamen Wand 1. Schlitze 18 im flanschartigen Teil 3 und Schlitze 19 im schaftartigen Teil 2 des Schiebers sind jeweils kongruent mit den Schlitzen 16 in dem Querschott 4 bzw. mit den Schlitzen 17 in der Wand 1. Die Schlitze 18 und 19 sind auf dem Schieber jedoch in Umfangsrichtung so gegeneinander versetzt, daß in der Stellung, in der die Schlitze 18 mit den Schlitzen 16 gerade übereinander liegen, jeder der Schlitze 17 jeweils in der Mitte zwischen den beiden benachbarten Schlitzen 19 liegt. Da jede der Schlitzgruppen mit der gleichen Teilung auf dem Umfang angeordnet ist, liegen demzufolge in einer anderen Stellung, der anderen Endstellung, die Schlitze 18 jeweils in der Mitte zwischen zwei benachbarten Schlitzen 16, wenn die Schlitze 17 mit den Schlitzen 19 fluchten.

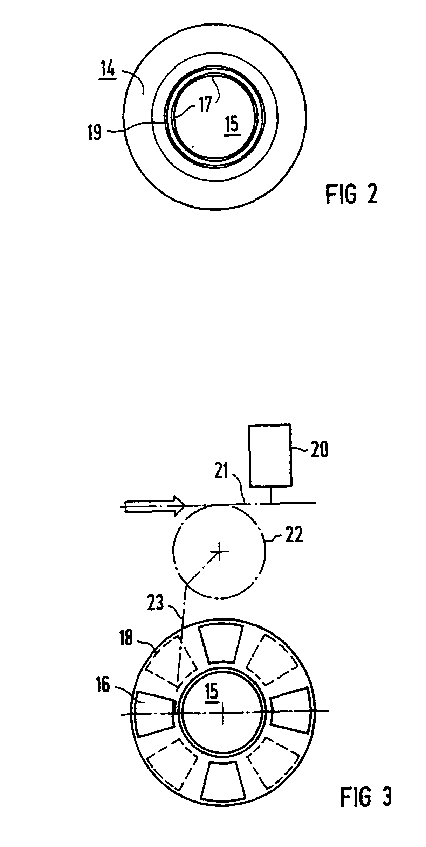

Wie in Figur 3 durch punktgestrichelte Linien dargestellt, ist der Schieber motorisch verstellbar. Dabei treibt ein Elektromotor 20 über ein Getriebe 21 und 22 eine Schubstange 23, die den Schieber zwischen seinen Endstellungen bewegt. Neben diesem Antrieb über die Getriebe 21 und 22 ist noch eine nicht näher dargestellte hydraulische oder pneumatische Betätigungseinrichting für den Schieber vorgesehen. Diese zusätzliche Betätigungseinrichtung ist dem erstgenannten Antrieb überlagert und dient der schnellen, quasi schlagartigen Umschaltung der Armatur in die in der Zeichnung dargestellte Lage, bei der die Schlitze 17 und 19 miteinander fluchten und einen Umgehungskanal für die verdichtete Luft bilden, die dadurch an der Brennkammer vorbei direkt zur Turbine 6 fließt. Die Schlitze 16 sind in dieser Schieberstellung durch Stege zwischen den Schlitzen 18 verschlossen.

Im Normalbetrieb fluchten die Schlitze 16 und 18 miteinander und die Schlitze 17 in der Wand 1 sind durch Stege zwischen den Schlitzen 19 verschlossen. Im Normalbetrieb strömt daher die verdichtete Luft, wie oben bereits ausgeführt, in Richtung der Pfeile 8 und 11 vom Verdichterauslaß 9 durch die Gasarmatur 10 zur feststoffbefeuerten Brennkammer und das von dort kommende entstaubte Heißgas strömt in Richtung der Pfeile 12 und 24 durch den Turbineneinlaß 13 in die Turbine 6.

Im Teillastbetrieb wird der Schieber langsam in eine dem jeweiligen Lastzustand angepaßte Zwischenstellung gebracht, bei der nur ein Teil der verdichteten Luft zur Brennkammer und der Rest der verdichteten Luft durch die sich teilweise gegenseitig freigebenden Schlitze 17 und 19 direkt zur Turbine gelangt. Dadurch bleibt der Massenstrom in der Turbine in einer vertretbaren Größenordnung.

Bei einem Lastabwurf, nachdem die Turbine praktisch ungebremst sich selbst beschleunigen würde, wird der Schieber durch die hydraulische oder pneumatische Betätigungseinrichtung annähernd schlagartig in die Endstellung gefahren, in der die Schlitze 17 und 19 miteinander fluchten und die Schlitze 16 in dem Querschott 4 durch Stege zwischen den Schlitzen 18 vollständig verdeckt sind. Dadurch ist zum einen schlagartig die Zufuhr von Verbrennungsluft zur Brennkammer unterbrochen und zum anderen der Massenstrom in der Turbine teilweise aufrechterhalten. Gleichzeitig wird die Turbine 6 durch die gegenüber dem Heißgas wesentlich kühlere, verdichtete Luft gekühlt. Außerdem verhindert die unter einem höheren Druck als das Heißgas stehende verdichtete Luft zumindest so lange die Zufuhr von Heißgas zur Turbine 6, bis das Heißgas durch weitere Maßnahmen abgeleitet ist.

Der Einsatz der erfindungsgemäßen Gasarmatur ist sowohl bei Gasturbinenanlagen mit unmittelbar an Verdichter 5 und Gasturbine 6 angebauten Brennkammern als auch für Anlagen mit entfernt von diesen aufgestellten Brennkammern geeignet.

## Patentansprüche

1. Gasarmatur für eine Anordnung aus einer Gasturbine (6), einem Verdichter (5) für Verbrennungsluft und einer Brennkammer, wobei ein mit einem Verdichterauslaß (9) verbundener Kanal (14) zur Führung der verdichteten Luft und ein mit einem Turbineneinlaß (13) verbunder Kanal (15) zur Führung von Heißgas eine gemeinsame Wand (1) aufweisen, wobei wenigstens auf einer Seite der gemeinsamen Wand (1) ein Querschott (4) als Quertrennwand vorgesehen ist,
**dadurch gekennzeichnet,**
- daß das Querschott und in dessen verdichterseitigem Bereich die gemeinsame Wand (1) durch einen Schieber abgedeckt sind und
- daß durch Schlitze (18, 19) im Schieber korrespondierende Schlitze (17, 16) in der gemeinsamen Wand (1) und in der Querwand (4) wechselweise verschließbar sind.

2. Gasarmatur nach Anspruch 1,
**dadurch gekennzeichnet,**
daß die gemeinsame Wand (1) zwischen dem Querschott (4) und der Mündung des von dieser verschlossenen, mit dem Verdichterauslaß (9) verbundenen Kanals (14) liegt.

3. Gasarmatur nach Anspruch 1 und 2,
**dadurch gekennzeichnet,**
daß der Schieber im Querschnitt L-förmig ist.

4. Gasarmatur nach einem der Ansprüche 1 bis 3,
**dadurch gekennzeichnet,**
daß der mit dem Turbineneinlaß (13) verbundene Kanal (15) und der mit dem Verdichterauslaß (9) verbundene Kanal (14) konzentrisch ineinander liegen.

5. Gasarmatur nach einem der Ansprüche 1 bis 4,
**dadurch gekennzeichnet,**
daß der mit dem Turbineneinlaß (13) verbundene Kanal (15) und der mit dem Verdichterauslaß (9) verbundene Kanal (14) im Querschnitt kreis- bzw. kreisringförmig sind.

6. Gasarmatur nach einem der Ansprüche 1 bis 5,
**dadurch gekennzeichnet,**
daß der Schieber ringförmig ist und parallel zu den Schlitzflächen bewegbar ist.

7. Gasarmatur nach einem der Ansprüche 1 bis 6,
**dadurch gekennzeichnet,**
daß der Schieber in einer Endstellung die Schlitze (16) im Querschott (4) verschließt und gleichzeitig die Schlitze (17) in der gemeinsamen Wand (1) frei gibt und daß die freigegebenen Schlitze (18) in der gemeinsamen Wand (1) einen Umgehungskanal darstellen, durch den verdichtete Luft direktvom mit dem Verdichterauslaß (9) verbundenen Kanal (14) zum mit dem Turbineneinlaß (13) verbundenen Kanal (15) strömt.

## Claims

1. Gas valve for an arrangement consisting of a gas turbine (6), a compressor (5) for combustion air and a combustion chamber, a duct (14), which is connected to a compressor outlet (9), for carrying the compressed air and a duct (15), which is connected to a turbine inlet (13), for carrying hot gas having a common wall (1), a transverse bulkhead (4) being provided as a transverse separating wall on at least one side of the common wall (1),
characterized in that
- the transverse bulkhead and, in the region of the compressor side of the transverse bulkhead, the common wall (1) are covered by a slide and
- in that corresponding slots (17, 16) in the common wall (1) and in the transverse wall (4) can be alternately closed by lands between the slots (18, 19) in the slide.

2. Gas valve according to Claim 1, characterized in that the common wall (1) is located between the transverse bulkhead (4) and the opening of the duct (14) which is closed by the said wall (1) and is connected to the compressor outlet (9).

3. Gas valve according to Claim 1 and 2, characterized in that the slide is L-shaped in cross-section.

4. Gas valve according to one of Claims 1 to 3, characterized in that the duct (15) which is connected to the turbine inlet (13) and the duct (14) which is connected to the compressor outlet (9) are located concentrically one within the other.

5. Gas valve according to one of Claims 1 to 4, characterized in that the duct (15) which is connected to the turbine inlet (13) and the duct (14) which is connected to the compressor outlet (9) are respectively circular and annular in cross-section.

6. Gas valve according to one of Claims 1 to 5, characterized in that the slide is ring-shaped and can be moved parallel to the slot areas.

7. Gas valve according to one of Claims 1 to 6, characterized in that in one end position, the slide closes the slots (16) in the transverse bulkhead (4) and simultaneously frees the slots (17) in the common wall (1) and in that the freed slots (18) in the common wall (1) represent a by-pass duct through which compressed air flows directly from the duct (14), which is connected to the compressor outlet (9), to the duct (15), which is connected to the turbine inlet (13).

## Revendications

1. Robinet à gaz pour une installation constituée d'une turbine (6) à gaz, d'un compresseur (5) pour de l'air de combustion et d'une chambre de combustion, une canalisation (14) communiquant avec une sortie (9) du compresseur et servant à faire passer de l'air comprimé et une canalisation (15) communiquant avec une entrée (13) de la turbine et servant à faire passer du gaz chaud ayant une paroi (1) commune, une cloison (4) transversale étant prévue comme paroi de séparation transversale au moins d'un côté de la paroi (1) commune,
caractérisé
- en ce que la cloison transversale et, dans sa région côté compresseur, la paroi (1) commune sont recouvertes par un obturateur et
- en ce que, par des fentes (18, 19) ménagées dans l'obturateur, des fentes (17, 16) correspondantes ménagées dans la paroi (1) commune et dans la paroi (4) transversale peuvent être fermées alternativement.

2. Robinet à gaz suivant la revendication 1, caractérisé en ce que la paroi commune se trouve entre la cloison (4) transversale et l'embouchure de la canalisation (14) qu'elle ferme et qui communique avec la sortie (9) du compresseur.

3. Robinet à gaz suivant la revendication 1 et 2, caractérisé en ce que l'obturateur est de section transversale en forme de L.

4. Robinet à gaz suivant l'une des revendications 1 à 3, caractérisé en ce que la canalisation (15) communiquant avec l'entrée (13) de turbine et la canalisation (14) communiquant avec la sortie (9) du compresseur sont concentriques l'une à l'autre.

5. Robinet à gaz suivant l'une des revendications 1 à 4, caractérisé en ce que la canalisation (15) communiquant avec l'entrée (13) de la turbine et la canalisation (14) communiquant avec la sortie (9) du compresseur sont de section transversale respectivement circulaire et annulaire circulaire.

6. Robinet à gaz suivant l'une des revendications 1 à 5, caractérisé en ce que l'obturateur est annulaire et mobile parallèlement aux surfaces comportant des fentes.

7. Robinet à gaz suivant l'une des revendications 1 à 6, caractérisé en ce que, en une position d'extrémité, l'obturateur ferme les fentes (16) ménagées dans la cloison (4) transversale et dégage en même temps les fentes (17) ménagées dans la paroi (1) commune et en ce que les fentes (18) dégagées de la paroi (1) commune représente une canalisation de détournement par laquelle de l'air comprimé va directement du canal (14) communiquant avec la sortie (9) du compresseur à la canalisation (15) communiquant avec l'entrée (13) de la turbine.
